# EUROPEAN PATENT SPECIFICATION

(11) **EP 0 509 130 B1**
(45) Date of publication and mention of the grant of the patent: **02.11.1995**
(21) Application number: 91113725.5
(22) Date of filing: 16.08.1991
(51) Int. Cl.: F16N 19/00, F16N 7/38

(54) **Centralized lubrication apparatus**
Zentralschmieranlage
Dispositif centralisé de lubrification

(30) Priority: 16.04.1991 JP 84099/91
(43) Date of publication of application: 21.10.1992
(73) Proprietor: MATSUURA MACHINERY CORPORATION, Fukui-shi Fukui-ken (JP)
(72) Inventor: Horikawa, Yoshiharu, Nyu-gun, Fukui-ken (JP); Kawada, Kazuya, Fukui-shi, Fukui-ken (JP); Yamada, Youichi, Sakai-gun, Fukui-ken (JP)
(74) Representative: Rau, Manfred, Dr. Dipl.-Ing.

(56) References cited:
- FR-A- 900 088
- FR-A- 2 338 378
- GB-A- 2 205 905
- US-A- 4 012 012

## Description

The present invention relates to a centralized lubrication system and more particularly to an apparatus adapted to supply lubricant oil to a multiplicity of machine tools in a centralized fashion.

It is a custom practice in the field of machine tools to provide lubrication systems individually for individual machine tools for supplying lubricant oil.

When a machine tool is continuously operated for an extended period of time, lubrication oil must be replenished due to limitation in the capacity of an oil supply tank of a lubrication system and this replenishment has been conventionally done manually.

In the recent advent of unmanned operation of machine tools, unmanned replenishment of lubrication oil is being anticipated.

In case of using a plurality of machine tools, if storage tanks and lubrication systems are provided for individual machine tools, then there is a problem of increased space and costs.

If one storage tank is connected to the lubrication oil tanks of a plurality of machine tools, the problem relating to the increased space may be solved but requirement of a large pump will cause another problem.

In the centralized lubrication apparatus of document US-A-4 012 012 (LIGLER), which accords to the preamble of claim 1, there is a pump, which is continuously performed and which feeds oil to different main oil tanks via a distribution valve. Via this distribution valve, the oil is fed at a single stretch, whereby the same amount of oil is delivered to each single machine. This means that oil is even fed to a machine, which has enough oil in its tank. Insofar, there is a risk that the respective tank overflows.

Accordingly an object of the present invention is to solve the problems as above described and to provide a centralized lubrication system capable of replenishing lubrication oil appropriately and automatically to the oil supply tank for satisfying a multiplicity of apparatuses to be lubricated.

The present invention has solved the problems as above mentioned by a centralized lubication apparatus according to the charaterizing part of claim 1.

According to the present invention, the lubrication oil is circulated to the circulation system comprising a storage tank, an oil supply pump and an oil supply conduit and when the level of the oil in the oil supply tank relating to the respective apparatuses to be lubricated goes below a specified level, the concerned branch pipe will be opened by operation of the shut-off control valve, whereby the lubrication oil may be supplied to the concerned oil supply tank by the supply conduit of the circulation system. In the circulation system, since the lubrication oil is circulated as required, operation of the shut-off control valves such as electromagnetic valves makes it possible to replenish lubrication oil easily. Since replenishment of lubrication oil to the respective oil supply tank may be controlled through opening and closing of the shut-off control valves, no high pressure will be required. Furthermore, since the oil supply pump requires only the power enough to supply the lubrication oil to the circulation system, a relatively small pump is good enough to replenish oil to a multiplicity of apparatuses to be lubricated.

According to the present invention, since only one storage tank is required, the respective oil supply tanks may be of small size, an oil supply conduit is only required and the oil supply pump in the lubrication system requires only the power enough for circulating the fluid, many apparatuses to be lubricated may be serviced without requiring considerable pressure and a relatively small pump may be used, resulting in saving the space and cost.

According to the present invention, unmanned operation of a multiplicity of apparatus may be reliably realized.

The lubrication apparatus according to the present invention may be applied to the existing apparatuses such as machine tools by adding the shut-off control valves provided at the branch pipes. The present invention can be readily applied by connecting or removing the shut-off control valves, even if the apparatuses are relocated.

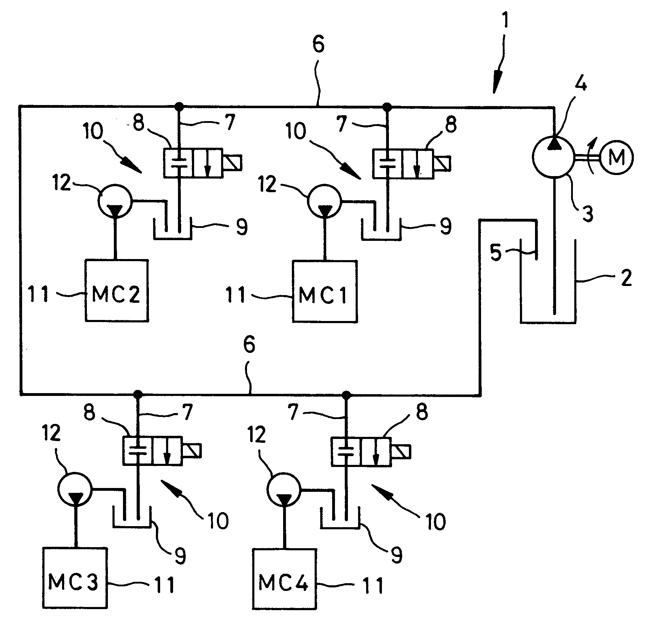

The accompanying drawing is the schematic diagram for explaining about the centralized lubrication apparatus according to the present invention.

The present invention will now be explained in detail by referring to the embodiment illustrated in the accompanying drawing.

In this drawing, the circulation system 1 comprises the storage tank 2, the oil supply pump 3 connected to the storage tank 2 and adapted to suck and deliver the lubrication oil from the storage tank 2 and the supply conduit 6 connecting the delivery port 4 of the oil supply pump 3 and the return port 5 of the storage tank 2 and extending through necessary locations.

A plurality of, or four in the illustrated example of branch pipes 7 are provided at the necessary locations along the supply conduit 6. The quantity of the branch pipes 7 may be suitably selected.

The respective branch pipes are connected to the oil supply tanks 9 for the respective apparatuses to be lubricated via shut-off control valves 8 such as electromagnetic shut-off valves. When the shut-off control valves 8 are opened, the lubrication oil may be supplied to the oil supply tanks 9 from the supply conduit 6.

The respective oil supply systems 10 consist of the branch pipe 7, the shut-off control valve 8 and the oil supply tank 9, and in the case of the illustrated example four of such supply systems are provided.

To the respective oil supply systems 10, there are connected oil supply apparatuses 12 for the respective apparatuses 11 to be lubricated such as machine tools MC. For simplicity of illustration, the oil supply apparatus 12 is represented only by the pump. For differentiating four of the machine tools MC as the apparatuses to be lubricated, symbols such as MC1, MC2, MC3, MC4 are employed.

It is to be noted that the oil supply pump 3 is stopped when there is sufficient lubrication oil in the oil supply tanks 9 of the respective machine tools MC.

Level switches are provided in the respective oil supply tanks 9. More specifically, there are provided two or three level switches such as low level switches adapted to issue the oil supply signal indicating that replenishment is required, high level switches adapted to issue the stop signal indicating that lubrication oil is full and replenishment should be stopped, and as required over-flow level switches adapted to indicate that the lubrication oil is in the state of overflowing. The shut-off control valves 8 are opened or closed in accordance with the signals from the respective level switches.

When the lubrication oil is continuously supplied by the oil supply apparatus 12 and the oil supply signal is issued by the low level switch in the oil supply tank 9 in any of the machine tools 11, the oil supply pump 3 is firstly activated, and after the oil is circulated in the circulation system 1, the concerned shut-off control valve 8 is opened so that the lubrication oil is replenished from the supply conduit to the oil supply tank 9. If the stop signal is issued by the high level switch during replenishment of the lubrication oil, the concerned shut-off control valve 8 is switched over and the branch pipe 7 will be closed.

If the oil supply signal is issued from the other oil supply tank 9 during replenishment of the lubrication oil by one of the branch pipes, then the respective shut-off control valve 8 is activated so that the concerned branch pipe 7 is opened and the lubrication oil may be replenished. It is as a matter of choice that a plurality of shut-off control valves 8 may be opened or closed simultaneously.

If stop signals are issued for all supply systems during replenishment of the lubrication oil, all shut-off control valves are closed and subsequently or after the lapse of a specified time, the oil supply pump 3 is stopped.

In the case of four machine tools, if the tank having a capacity to the order of 10 liter is prepared as the oil supply tank 9 for the respective machine tool 9 and the tank having a capacity in the order of 200 liter is prepared as the storage tank 2, unmanned operation may be executed so long as a sufficient amount of the lubrication oil is replenished to the storage tank 2 in the day time when workers are available and then there is no fear of shortage of the lubrication to be supplied during the night work shift.

If a low level switch and a high level switch are provided in the storage tank 2 and when the level of the oil is lowered below the low level, then the low level switch is activated to indicate necessity of oil replenishment. If the high level switch is activated, indication is made as to stoppage of oil replenishment, thus replenishment of the lubrication oil being positively performed.

In the illustrated example, lubrication for the machine tools has been described. However, centralized lubrication may be employed not only in machine tools but also in other various sorts of apparatuses. Furthermore, although examples of lubrication has been illustrated and the terminology of lubrication has been used, it should be understood that the present invention may be applied not only for oil lubrication but also for treatment of any kind of liquid.

## Claims

1. A centralized lubrication system for supplying lubricant to a plurality of apparatuses (MC1, MC2, MC3, MC4) to be lubricated, each apparatus (MC1, MC2, MC3, MC4) to be lubricated having a lubricant supply device (12), the centralized lubrication system further comprising a lubricant circulation system (1) having a storage tank (2) including a return port (5), a lubricant supply pump (3) connected to said storage tank (2) and including a delivery port (4), and a supply conduit (6) connecting the delivery port (4) of said lubricant supply pump (3) and the return port (5) of said storage tank (2); and a lubricant supply system having a plurality of branch pipes (7) provided at a plurality of suitable locations along said supply conduit (6) and a plurality of lubricant supply tanks (9) connected to respective branch pipes (7), each lubricant supply tank (9) being connected to a respective lubricant supply device (12) of a separate one of said plurality of apparatuses (MC1, MC2, MC3, MC4) to be lubricated, characterized in that each lubricant supply tank (9) is connected to the respective branch pipe (7) via a shut-off control valve (8) and in that each lubricant supply tank (9) includes a plurality of level switches for issuing signals indicating different lubricant levels in the respective lubricant supply tank (9), said respective shut-off control valve (8) opening and closing a respective branch pipe (7) in response to said signals.

2. A centralized lubrication system as in claim 1, characterized in that said shut-off control valves (8) comprise electromagnetic valves.

3. A centralized lubrication system as in claim 1, characterized in that said storage tank (2) includes a first level switch for indicating low lubricant level in said storage tank (2), and a second level switch for indicating a filled lubricant level in said storage tank.

## Patentansprüche

1. Zentralisiertes Schmiersystem zum Zuführen eines Schmiermittels zu einer Vielzahl von zu schmierenden Apparaten (MC1, MC2, MC3, MC4), wobei jeder zu schmierende Apparat (MC1, MC2, MC3, MC4) eine Schmiermittelzuführungsvorrichtung (12) aufweist, wobei das zentralisierte Schmiersystem weiterhin umfaßt ein Schmiermittelzirkulationssystem (1) mit einem Vorratstank (2) einschließlich einem Rücklaufanschluß (5), eine Schmiermittelzuführungspumpe (3), die mit dem Vorratstank (2) verbunden ist und einem Auslaßanschluß (4) umfaßt, und eine Zuführungsleitung (6), die den Auslaßanschluß (4) der Schmiermittelzuführungspumpe (3) und den Rücklaufanschluß (5) des Vorratstanks (2) verbindet, sowie ein Schmiermittelversorgungssystem mit einer Vielzahl von Zweigleitungen (7), die an einer Vielzahl von geeigneten Stellen entlang der Zuführungsleitung (6) vorgesehen sind, und mit einer Vielzahl von Schmiermittelversorgungstanks (9), die mit den jeweiligen Zweigleitungen (7) verbunden sind, wobei jeder Schmiermittelversorgungstank (9) mit der jeweiligen Schmiermittelzuführungsvorrichtung (12) eines aus der Vielzahl der zu schmierenden Apparate (MC1, MC2, MC3, MC4) verbunden ist, dadurch gekennzeichnet, daß jeder Schmiermittelversorgungstank (9) mit der jeweiligen Zweigleitung (7) über ein Absperr-Steuerventil (8) verbunden ist, und daß jeder Schmiermittelversorgungstank (9) eine Vielzahl von Niveauschaltern zur Ausgabe von Signalen aufweist, die unterschiedliche Schmiermittelniveaus in dem jeweiligen Schmiermittelversorgungstank (9) anzeigen, wobei das jeweilige Absperr-Steuerventil (8) eine jeweilige Zweigleitung (7) in Abhängigkeit dieser Signale öffnet und schließt.

2. Zentralisiertes Schmiersystem nach Anspruch 1, dadurch gekennzeichnet, daß die Absperr-Steuerventile (8) elektromagnetische Ventile umfassen.

3. Zentralisiertes Schmiersystem nach Anspruch 1, dadurch gekennzeichnet, daß der Vorratstank (2) einen ersten Niveauschalter zur Anzeige eines niedrigen Schmiermittel-Standes in dem Vorratstank (2) und einen zweiten Niveauschalter zum Anzeigen eines gefüllten Schmiermittel-Standes in dem Vorratstank aufweist.

## Revendications

1. Système centralisé de lubrification pour la fourniture d'un fluide de lubrification à une pluralité de dispositifs (MC1, MC2, MC3, MC4) à lubrifier, chaque dispositif (MC1, MC2, MC3, MC4) à lubrifier possédant un dispositif d'alimentation de fluide de lubrification (12), système centralisé de lubrification comprenant, de plus, un système de circulation de fluide de lubrification (1) possédant un réservoir de stockage (2) comprenant un orifice de retour (5), une pompe d'alimentation de fluide de lubrification (3) raccordée audit réservoir de stockage (2) et comprenant un orifice de délivrance (4) et une conduite d'alimentation (6) raccordant l'orifice de délivrance (4) de ladite pompe d'alimentation de fluide de lubrification (3) et l'orifice de retour (5) dudit réservoir de stockage (2);
système d'alimentation de fluide de lubrification possédant une pluralité de conduites de dérivation (7) prévues sur une pluralité de positions adaptées le long de ladite conduite d'alimentation (6) et une pluralité de réservoirs d'alimentation de fluide de lubrification (9) raccordés aux conduites respectives de dérivation (7), chaque réservoir d'alimentation de fluide de lubrification (9) étant raccordé à un dispositif respectif d'alimentation de fluide de lubrification (12) d'un dispositif séparé de ladite pluralité de dispositifs (MC1, MC2, MC3, MC4) à lubrifier,
système caractérisé en ce que chaque réservoir d'alimentation de fluide de lubrification (9) est raccordé à la conduite respective de dérivation (7) via une soupape de commande d'isolation (8) et en ce que chaque réservoir d'alimentation de fluide de lubrification (9) comprend une pluralité de commutateurs de niveau pour délivrer des signaux indiquant différents niveaux de fluide de lubrification dans le réservoir d'alimentation de fluide de lubrification (9) respectif, ladite soupape respective de commande d'isolation (8) ouvrant et fermant une conduite respective de dérivation (7) en réponse auxdits signaux.

2. Système centralisé de lubrification selon la revendication 1, caractérisé en ce que lesdites soupapes de commande d'isolation (8) comprennent des soupapes électromagnétiques.

3. Système centralisé de lubrification selon la revendication 1, caractérisé en ce que ledit réservoir de stockage (2) comprend un premier commutateur de niveau pour indiquer un bas niveau de fluide de lubrification dans ledit réservoir de stockage (2) et un second commutateur de niveau pour indiquer un niveau de remplissage de fluide de lubrification dans ledit réservoir de stockage.
